# EUROPÄISCHE PATENTSCHRIFT

(11) **EP 1 410 875 B1**
(45) Veröffentlichungstag und Bekanntmachung des Hinweises auf die Patenterteilung: **21.06.2006**
(21) Anmeldenummer: 03023172.4
(22) Anmeldetag: 13.10.2003
(51) Int. Cl.: B23Q 11/00, B27C 5/10

(54) **Absaugeinrichtung für ein motorbetriebenes Handwerkzeug, insbesondere eine Fräsmaschine**
Suction Device for a Motor Driven Hand Tool, especially a Router
Dispositif d'aspiration pour un outil à main motorisé, en particulier pour une défonceuse

(30) Priorität: 18.10.2002 DE 20216066 U; 14.03.2003 AT 1792003 U
(43) Veröffentlichungstag der Anmeldung: 21.04.2004
(73) Patentinhaber: Festool GmbH, 73240 Wendlingen (DE)
(72) Erfinder: Kraus, Robert, 3003 Gablitz (AT)
(74) Vertreter: Reimold, Otto

(56) Entgegenhaltungen:
- EP-A- 0 673 730
- EP-A- 0 765 719
- DE-A- 1 948 940
- GB-A- 2 328 642
- US-A- 4 088 164
- US-A- 4 750 536
- US-A- 4 821 365
- US-A- 6 061 865
- US-B1- 6 250 859

## Beschreibung

Die vorliegende Erfindung bezieht sich auf eine Absaugeinrichtung für ein motorbetriebenes Handwerkzeug, gemäß dem Oberbegriff des Anspruchs 1. Eine solche Absaugeinrichtung ist aus dem Dokument US 6,250, 859 B1 bekannt.

Für die Herstellung von Einrichtungsgegenständen, wie beispielsweise. Möbel, Wandverbauten, Kücheneinrichtungen oder dgl., ist es bekannt, unterschiedlichste Materialien einzusetzen. Zur Bearbeitung der Oberfläche der Materialien sowie zur Ausbildung von speziellen Profilen und Kanten sind eine Mehrzahl von unterschiedlichen Werkzeugen, wie beispielsweise Sägen oder Fräsen, bekannt, mit welchen diese Materialien bearbeitet werden können. Neben der Verwendung von Holz oder im wesentlichen aus Holz bestehenden Materialien finden zunehmend spezielle Kunststoffe in Form von Platten Verwendung, wobei diese Kunststoffe sich durch entsprechend gute Widerstands- und Härteeigenschaften auszeichnen. Im Gegensatz zu Holz sind derartige, beispielsweise steinmehlhaltige Kunststoffe jedoch zumeist nur in Form von relativ dünnen Platten wirtschaftlich sinnvoll herstellbar, so daß zur Herstellung von dickeren, plattenförmigen Elementen, wie Arbeitsplatten, oder bei der Ausbildung von Kanten mehrere dieser Platten mit entsprechenden Spezialklebern miteinander verbunden bzw. verklebt werden, worauf anschließend eine Oberflächenbehandlung zur Ausbildung von abgerundeten Kanten, Hohlkehlen, bei Übergängen zwischen im wesentlichen normal aufeinander stehenden Elementen oder dgl. vorgenommen wird.

Bei der Bearbeitung derartiger Materialien entsteht üblicherweise eine große Menge von Abfällen, Staub, Spänen oder dgl., welche insbesondere für den Fall einer Verwendung der letztgenannten Kunststoffplatten wenigstens teilweise als gesundheitlich problematisch zu bezeichnen sind. Darüber hinaus ist davon auszugehen, daß allgemein eine übermäßige Aufnahme von Staub durch das Bedienungspersonal verringert bzw. weitestgehend vermieden werden soll.

Die vorliegende Erfindung zielt somit darauf ab, eine Einrichtung der eingangs genannten Art zur Verfügung zu stellen, mit welcher ein motorbetriebenes Handwerkzeug, insbesondere eine Fräsmaschine, ausgerüstet werden kann, ohne den Einsatzzweck des motorbetriebenen Handwerkzeugs, insbesondere der Fräsmaschine, einzuschränken und gleichzeitig eine zuverlässige Absaugung von bei einem Einsatz eines derartigen motorbetriebenen Handwerkzeugs anfallendem Abfall, Spänen oder Staub sicherzustellen.

Die Absaugeinrichtung ist so ausgestattet, daß im Bereich der Auflageplatte der Maschine eine zu dem Werkzeug gerichtete, meöffnung zur Aufnahme von Abfall, Spänen, Staub oder dgl. lösbar festlegbar bzw. montierbar ist, an welche über einen Anschluß eine Saugquelle zum Ausbringen des Abfalls bzw. der Späne angeschlossen bzw. anschließbar ist. Dadurch, daß im Bereich der Auflageplatte der Maschine eine zu dem Werkzeug, beispielsweise einem Fräser gerichtete, Aufnahmeöffnung vorgesehen ist, an welche eine Unterdruck- bzw. Saugquelle zum Ausbringen des Abfalls bzw. der Späne oder des Staubs angeschlossen oder anschließbar ist, wird sichergestellt, daß unmittelbar im Bereich des Entstehens bzw. Anfalls des Staubs oder der bei der Bearbeitung entstehenden Abfälle diese aufgenommen und sicher abtransportiert werden, bevor sie gegebenenfalls fein verteilt in die Umgebung des bearbeitenden Werkzeugs gelangen. Es ist somit möglich, eine im wesentlichen staubfreie bzw. abfallfreie Bearbeitung sicherzustellen. Dadurch, daß die Aufnahmeöffnung lösbar an der Auflageplatte bzw. Führungsplatte der Maschine festlegbar bzw. montierbar ist, wird weiters sichergestellt, daß ein einfaches Entfernen der Einrichtung ohne komplizierten Betätigungs- bzw. Arbeitsaufwand möglich wird, so daß das motorbetriebene Handwerkzeug in speziellen Einsatzfällen, in welchen beispielsweise aus Platzgründen die durch die vorgesehene Absaugeinrichtung ermöglichte Staubabsaugung nicht eingesetzt werden kann, nach einem einfachen Entfernen der Absaugeinrichtung die Maschine bzw. des motorbetriebenen Handwerkzeugs unverändert zum Einsatz gelangen kann.

Um eine ordnungsgemäße Absaugung von Abfall, Staub, Spänen oder dgl. bei unterschiedlichen Einsatzzwecken des motorbetriebenen Handwerkzeugs zur Verfügung zu stellen, wird erfindungsgemäß vorgeschlagen, daß die Aufnahmeöffnung in einen ringförmigen Absaugkanal mündet, welcher im Bereich des Außenumfangs der Auflageplatte lösbar festlegbar ist, und daß an den ringförmigen Absaugkanal die Saugquelle angeschlossen bzw. anschließbar ist. Ein derartiger, ringförmiger Absaugkanal ermöglicht, daß entsprechend unterschiedlichen Einsatzzwecken die Aufnahmeöffnung gegebenenfalls an unterschiedlichen Positionen entlang des Umfangs der Auflageplatte verstellbar ist. Ein derartiger, ringförmiger Absaugkanal, in welchen die Aufnahmeöffnung mündet, ermöglicht darüber hinaus, daß unabhängig von der speziellen Lage der Aufnahmeöffnung der Absaugeinrichtung eine im wesentlichen fixe bzw. festgelegte Position für den Anschluß der Saugquelle beispielsweise über eine flexible Leitung vorgesehen werden kann.

Gemäß einer bevorzugten Ausführungsform wird vorgeschlagen, daß die Aufnahmeöffnung über einen rohrförmigen Kanal in den ringförmigen Absaugkanal mündet, wodurch möglich wird, bei einem gegebenenfalls größeren Abstand des Absaugkanals von dem Werkzeug,- beispielsweise dem Fräser, die Aufnahmeöffnung der erfindungsgemäßen Absaugeinrichtung in unmittelbarer Nachbarschaft des Werkzeugs anzuordnen, wodurch eine entsprechend sichere und zuverlässige Aufnahme des abzusaugenden bzw. zu entfernenden Abfalls oder Staubs möglich wird.

Wie oben bereits angedeutet, kann für unterschiedliche Einsatzzwecke bzw. bei einer Führung des motorbetriebenen Handwerkzeugs entlang von gekrümmten Bahnen eine Verstellbarkeit der Aufnahmeöffnung relativ zur Auflageplatte des motorbetriebenen Handwerkzeugs bevorzugt bzw. erwünscht sein, wobei in Verbindung mit einem im wesentlichen ringförmigen Absaugkanal gemäß einer weiters bevorzugten Ausführungsform vorgeschlagen wird, daß die Aufnahmeöffnung oder der rohrförmige Kanal über eine Gleiteinrichtung in den ringförmigen Absaugkanal mündet. Durch eine derartige Gleiteinrichtung wird sichergestellt, daß die Aufnahmeöffnung im wesentlichen stufenlos relativ zum Absaugkanal angeordnet und mit diesem verbunden werden kann und somit unabhängig von der relativen Lage zwischen der Auflageplatte des motorbetriebenen Handwerkzeugs und der Aufnahmeöffnung zuverlässig ein entsprechender Abtransport des zu entfernenden bzw. abzusaugenden Abfalls bzw. Staubs ermöglicht wird.

Für eine unmittelbare Anordnung der Aufnahmeöffnung im Bereich des Werkzeugs, beispielsweise eines Fräsers, wird gemäß einer weiters bevorzugten Ausführungsform vorgeschlagen, daß der Absaugkanal und die Aufnahmeöffnung an der zum Werkstück gerichteten Oberfläche der Auflageplatte konzentrisch zur Antriebsachse des Werkzeugs angeordnet sind und daß benachbart zu dem Absaugkanal eine in Richtung zum Werkstück vorragende Abstützoberfläche ausgebildet ist. Es läßt sich somit abgestimmt auf die Positionierung des Werkzeugs auch die Aufnahmeöffnung entsprechend nahe bei dem Werkzeug positionieren, wobei jedoch eine entsprechende Festlegung des ringförmigen Absaugkanals gemeinsam mit der Aufnahmeöffnung an der zum Werkzeug gewandten Oberfläche der Auflageplatte vorgesehen sein muß. Darüber hinaus muß eine zusätzliche Abstützoberfläche zur Verfügung gestellt werden, um eine Bewegung der Aufnahmeöffnung über die Gleiteinrichtung am Absaugkanal relativ zur Abstützoberfläche bzw. Auflageplatte der Maschine zu ermöglichen.

Gemäß einer abgewandelten Ausführungsform wird vorgeschlagen, daß der Absaugkanal an der vom Werkstück abgewandten Seite bzw. Oberfläche der Auflageplatte und/oder an einer Halterung zwischen der Maschine und der Auflageplatte angeordnet bzw. festgelegt ist und daß der rohrförmige Kanal zur Verbindung mit der Aufnahmeöffnung an der Außenseite der Auflageplatte ausgebildet ist, wobei mit dieser erfindungsgemäß bevorzugten Konstruktion insbesondere ermöglicht wird, die Auflageplatte des motorbetriebenen Handwerkzeugs unmittelbar auf dem zu bearbeitenden Werkstück anzuordnen. Weiters kann der üblicherweise bei einem derartigen motorbetriebenen Handwerkzeug zur Verfügung gestellten Arbeitshub des Werkzeugs durch die Anlenkung bzw. Festlegung der Absaugeinrichtung an einer mit der Auflageplatte verbundenen Halterung in vollem Ausmaß aufrecht erhalten werden. Darüber hinaus gelingt durch eine derartige Anordnung eine überaus einfach lösbare Festlegung des Absaugkanals an der Auflageplatte bzw. eine Halterung, so daß mit wenigen Handgriffen die erfindungsgemäße Absaugeinrichtung von dem motorbetriebenen Handwerkzeug entfernbar ist.

Für eine weitere Möglichkeit einer Justierung insbesondere der Aufnahmeöffnung der erfindungsgemäßen Absaugeinrichtung relativ zu dem Werkzeug des motorbetriebenen Handwerkzeugs wird gemäß einer weiters bevorzugten Ausführungsform vorgeschlagen, daß der Absaugkanal relativ zur Auflageplatte höhenverstellbar ausgebildet ist.

Zur weiteren Verbesserung der Absaugwirkung und um insbesondere zu verhindern, daß Späne bzw. Staub des motorbetriebenen Handwerkzeugs nach oben in Richtung zur Antriebseinrichtung und somit zum Bedienungspersonal freigesetzt bzw. ausgebracht werden, wird gemäß einer weiters bevorzugten Ausführungsform vorgeschlagen, daß oberhalb der Auflageplatte und in Abstand von dieser eine vorzugsweise lösbare Abdeckplatte vorgesehen ist, wobei der Freiraum zwischen der Auflageplatte und der Abdeckplatte mit dem Anschluß der Saugquelle in Verbindung steht. Durch eine derartige zusätzliche und vorzugsweise lösbare Abdeckplatte wird ermöglicht, daß Späne, welche durch das Werkzeug, beispielsweise einen Fräser, nach oben geschleudert werden, nicht in der Umgebung verteilt werden, sondern aus dem Freiraum zwischen der Auflageplatte und der Abdeckplatte direkt der Saugquelle zum Ausbringen der Späne zugeführt werden.

Um einen zusätzlichen Anschluß bzw. eine zusätzliche Saugquelle zum Ausbringen des Abfalls bzw. der Späne vermeiden zu können, wird in diesem Zusammenhang gemäß einer weiters bevorzugten Ausführungsform vorgeschlagen, daß in der Abdeckplatte eine Anschlußöffnung vorgesehen ist, welche über einen insbesondere flexiblen Schlauch mit dem ringförmigen Absaugkanal in Verbindung steht. Es wird somit eine einfache Verbindung zwischen dem Freiraum zwischen der Auflageplatte und der Abdeckplatte und insbesondere dem ringförmigen Absaugkanal zur Verfügung gestellt.

Zur Erzielung einer ordnungsgemäßen Abdichtung im Bereich der Festlegung der Abdeckplatte sowie dem Durchtritt einer Antriebswelle durch die Abdeckplatte ist darüber hinaus erfindungsgemäß vorgesehen, daß im Bereich der Festlegung der Abdeckplatte, welche in eine entsprechende Führung insbesondere seitlich einschiebbar ist, und/oder dem Durchtritt einer Antriebswelle Bürsten vorgesehen sind.

Damit die Sicht auf das zu bearbeitende Werkstück insbesondere im Bereich des Werkzeugs, beispielsweise des Fräsers, nicht durch die Abdeckplatte beeinträchtigt bzw. beschränkt wird, wird gemäß einer weiters bevorzugten Ausführungsform vorgeschlagen, daß die Abdeckplatte transparent und insbesondere aus einem elastischen, zähharten Werkstoff ausgebildet ist. Durch Einsatz eines elastischen bzw. zähharten Werkstoffs wird darüber hinaus sichergestellt, daß bei einem gegebenenfalls irrtümlichen Zurückziehen des Fräsers aus der Arbeitsstellung Schäden am Werkzeug, insbesondere Fräser, oder der Maschine vermieden werden, so daß lediglich die transparente Abdeckplatte ausgetauscht bzw. ersetzt werden muß.

Durch die zusätzlich vorgesehene Absaugung aus dem Bereich oberhalb der Auflageplatte und insbesondere aus dem Freiraum zwischen der Auflageplatte und der insbesondere lösbar festlegbaren Abdeckplatte wird sichergestellt, daß nahezu sämtlicher Abfall bzw. sämtliche Späne, welche bei der Bearbeitung eines Werkstücks entstehen, zuverlässig mit einer gemeinsamen bzw. kombinierten Absaugeinrichtung entfernt werden können.

Die Erfindung wird nachfolgend anhand von in der beiliegenden Zeichnung schematisch dargestellten Ausführungsbeispielen näher erläutert. In dieser zeigen:
Fig. 1 eine schematische Seitenansicht, teilweise im Schnitt, einer ersten Ausführungsform einer erfindungsgemäßen Absaugeinrichtung für ein motorbetriebenes Handwerkzeug, insbesondere eine Fräsmaschine;
Fig. 2 in einer zu Fig. 1 ähnlichen Darstellung eine abgewandelte Ausführungsform einer erfindungsgemäßen Absaugeinrichtung;
Fig. 3 wiederum in einer Ansicht ähnlich zu Fig. 1 eine weitere abgewandelte Ausführungsform einer erfindungsgemäßen Absaugeinrichtung;
Fig. 4 in einer wiederum zu Fig. 1 ähnlichen Darstellung eine weitere abgewandelte Ausführungsform einer erfindungsgemäßen Absaugeinrichtung;
Fig. 5 in einer wiederum zu Fig. 1 ähnlichen Teildarstellung eine weitere abgewandelte Ausführungsform einer erfindungsgemäßen Absaugeinrichtung, wobei zusätzlich oberhalb der Auflageplatte eine Abdeckplatte vorgesehen ist; und
Fig. 6 eine schematische Teildraufsicht auf die Abdeckplatte.

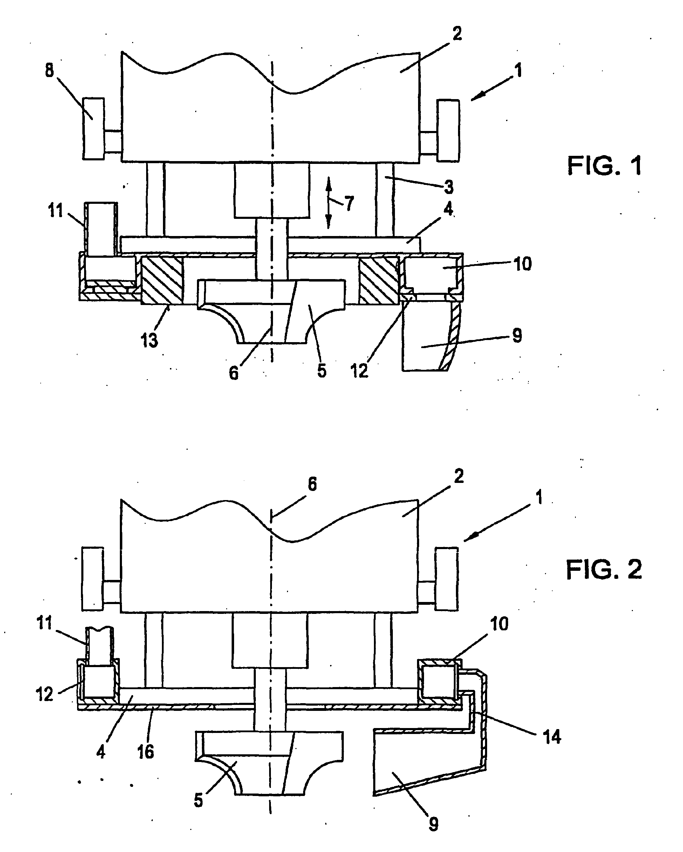

In den Fig. 1 bis 4 ist jeweils allgemein mit 1 ein motorbetriebenes Handwerkzeug, beispielsweise eine Fräsmaschine bezeichnet, wobei an einem lediglich schematisch angedeuteten Gehäuse 2 über eine Abstützeinrichtung bzw. Halterung 3 eine Auflageplatte 4 vorgesehen ist, welche auf einem nicht näher dargestellten Werkstück anzuordnen ist. In den dargestellten Ausführungsformen ist ein von einem Fräser 5 gebildetes Werkzeug um eine schematisch mit 6 angedeutete Achse durch einen nicht näher dargestellten Antrieb, welcher in dem Gehäuse 2 aufgenommen ist, antreibbar. Darüber hinaus ist der Fräser 5 üblicherweise relativ zu der Auflageplatte 4 höhenverstellbar, wie dies durch einen Doppelpfeil 7 angedeutet ist, wobei Handgriffe zum Tragen und Führen des motorbetriebenen Handwerkzeugs 1 mit 8 gezeigt sind.

Für eine Aufnahme von Abfall, Spänen oder Staub, welcher bei der Bearbeitung eines nicht näher dargestellten Werkstücks, beispielsweise einer Platte aus Holz oder Kunststoffmaterialien anfällt, ist im Bereich des Fräsers 5 an der Auflageplatte 4 eine Aufnahmeöffnung 9 vorgesehen, welche unmittelbar in einen ringförmigen Absaugkanal 10 mündet, wobei an den ringförmigen Absaugkanal 10 über einen Anschluß 11, beispielsweise über eine nicht näher dargestellte, flexible Leitung, eine Unterdruck- bzw. Saugquelle zum Ausbringen des Abfalls bzw. des Staubs anschließbar ist.

Bei der in Fig. 1 dargestellten Ausführungsform ist die trichterförmige Aufnahmeöffnung 9, welche, wie aus Fig. 1 ersichtlich, im wesentlichen auf Höhe des Fräsers 5 mündet, über eine schematisch mit 12 angedeutete Gleiteinrichtung relativ zu dem ringförmigen Absaugkanal 10 entlang von dessen Umfang verstellbar bzw. verschiebbar, so daß bei Führung des motorbetriebenen Handwerkzeugs 1 entlang von gekrümmten Bahnen die Aufnahmeöffnung 9 jeweils in Richtung eines Ausbringens von Abfall bzw. Staub von dem Fräser angeordnet werden kann.

Da bei der in Fig. 1 dargestellten Ausführungsform der ringförmige Absaugkanal 10 sowie die Aufnahmeöffnung 9 an der zu dem nicht näher dargestellten Werkstück angeordneten Seite der Auflageplatte 4 angeordnet sind, ist in Richtung zum Fräser 5 eine zusätzliche Abstützoberfläche 13 vorgesehen, welche geringfügig über den ringförmigen Absaugkanal 10 bzw. die Gleiteinrichtung 12 vorragt, so daß über die Abstützoberfläche 13 eine ordnungsgemäße Abstützung und Lagerung auf dem zu bearbeitenden Werkstück erfolgt, während die Aufnahmeöffnung 9 relativ zu dem Absaugkanal 10 verstellbar ist.

Bei der in Fig. 2 dargestellten, abgewandelten Ausführungsform ist abweichend von der Ausbildung gemäß Fig. 1 ein wiederum mit 10 bezeichneter ringförmiger Absaugkanal an der von dem nicht dargestellten, zu bearbeitenden Werkstück abgewandten Seite der Auflageplatte 4 über eine Positionier- bzw. Zwischenplatte 16 angeordnet bzw. festgelegt, wobei zwischen der Aufnahmeöffnung 9 und dem Absaugkanal 10 ein rohrförmiger Kanal 14 vorgesehen ist, um wiederum durch Anschließen einer Unterdruck- bzw. Saugquelle an den Anschlußstutzen 11 ein Ausbringen von Staub aus dem Bereich des Fräsers 5 über die trichterförmige Aufnahmeöffnung 9 durch den rohrförmigen Kanal 14 in den ringförmigen Absaugkanal 10 zu ermöglichen. Für eine Verstellbarkeit der Aufnahmeöffnung 9 sowie des rohrförmigen Zwischenkanals 14 relativ zum Absaugkanal 10 ist wiederum eine schematisch mit 12 angedeutete Gleiteinrichtung vorgesehen.-Bei der in Fig. 2 dargestellten Ausführungsform kann somit das motorbetriebene Handwerkzeug 1 über die Auflageplatte 4 und die dünne Zwischenplatte 16 an dem zu bearbeitenden Werkstück gelagert bzw. angeordnet werden, so daß gegebenenfalls bestehende Einstellungen für die Bearbeitung eines Werkstücks durch Positionierung des Fräsers 5 lediglich beispielsweise durch Einstellen eines entsprechenden Anschlags die Dicke der Zwischenplatte 16 berücksichtigen müssen.

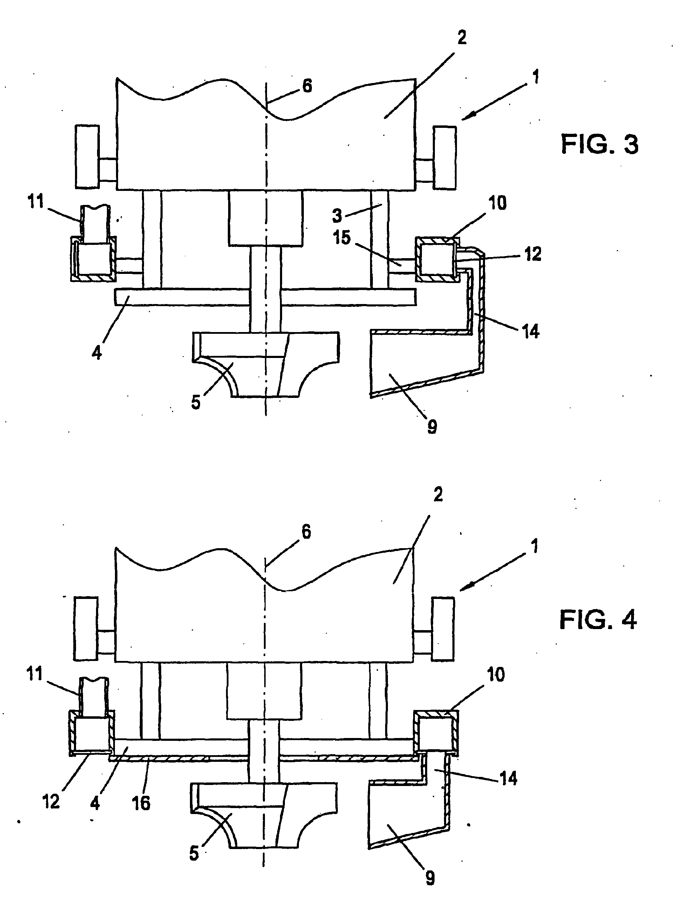

Auch bei den in Fig. 3 und 4 dargestellten Ausführungsformen ist der ringförmige Absaugkanal 10 an der vom Werkstück abgewandten Seite der Auflageplatte 4 vorgesehen, wobei jeweils zwischen der trichterförmigen Aufnahmeöffnung 9 und dem Absaugkanal ein rohrförmiger Kanal 14 vorgesehen ist. Es ist der rohrförmige Kanal 14 sowie die trichterförmige Aufnahmeöffnung 9 jeweils über die Gleiteinrichtung 12 relativ zu dem Absaugkanal 10 verstellbar, wobei eine Absaugung von Staub aus dem Absaugkanal 10 wieder über einen Anschluß einer nicht näher dargestellten Unterdruck- bzw. Saugquelle an den Anschlußstutzen 11 möglich wird.

Bei der Ausführungsform gemäß Fig. 3 wird der Absaugkanal 10 an der Halterung 3 über ein Abstützelement 15 gelagert, während bei der Ausführungsform gemäß Fig. 4 der Absaugkanal 10 unmittelbar an der Auflageplatte 4 an deren Außenumfang unter Zwischenschaltung einer dünnen Positionierplatte 16 angeordnet ist, welcher an der Auflageplatte 4 festlegbar ist.

Bei sämtlichen Ausführungsformen ist vorgesehen, daß der Absaugkanal 10 und dadurch die trichterförmige Aufnahmeöffnung 9 beispielsweise durch ein einfaches Klemmen an der Auflageplatte 4 bzw. der Halterung 3 festlegbar sind, so daß für spezielle Einsatzzwecke beispielsweise die Absaugeinrichtung kurzfristig entfernt werden kann.

Darüber hinaus ist durch die lösbare Festlegung der Absaugeinrichtung eine Nachrüstung von bestehenden motorbetriebenen Handwerkzeugen 1 ohne weiteres möglich.

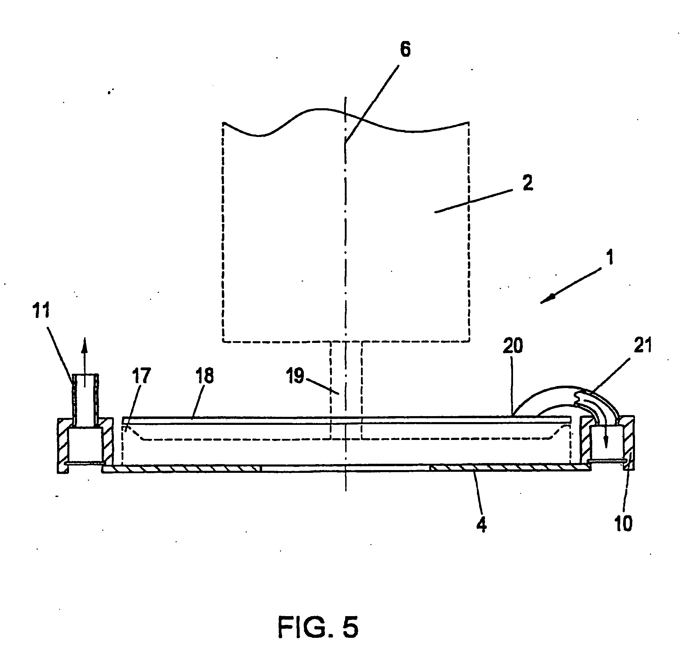

Bei der Teildarstellung gemäß Fig. 5 ist ersichtlich, daß oberhalb der Auflageplatte 4 eine insbesondere lösbar in eine schematisch mit 17 angedeutete Führung einschiebbare Abdeckplatte 18 vorgesehen ist, wobei in der Darstellung gemäß Fig. 5 das Werkzeug bzw. der Fräser nicht gezeigt ist, sondern lediglich eine Antriebswelle 19 angedeutet ist.

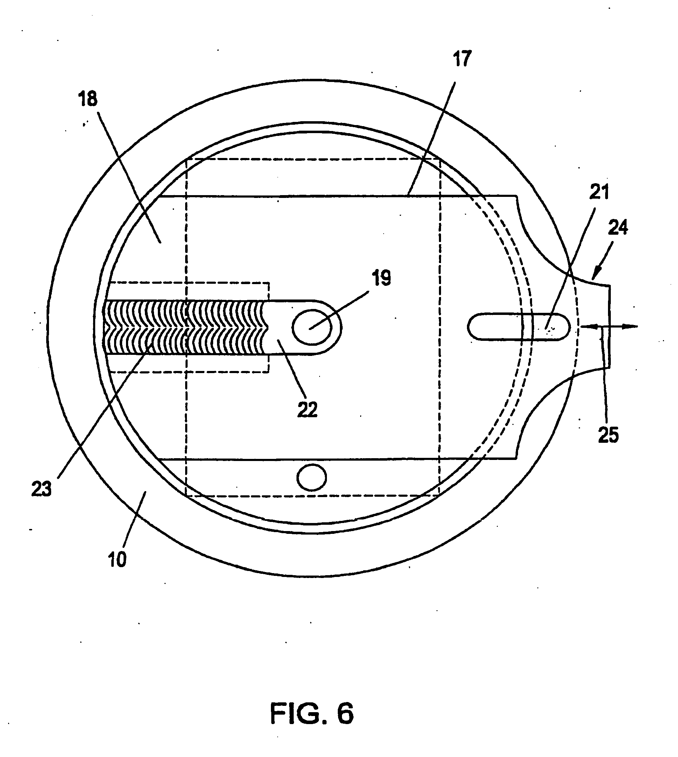

Bei der Teildraufsicht gemäß Fig. 6 ist darüber hinaus ersichtlich, daß zur Abdichtung einer Aufnahmeöffnung 22 für die Antriebswelle 19 Bürsten 23 vorgesehen sind. Weiters ist eine Grifflasche 24 an der Abdeckplatte 18 angedeutet, um eine Bewegung bzw. Verschiebung der Abdeckplatte 18 entsprechend dem Doppelpfeil 25 zu ermöglichen.

Die insbesondere aus transparentem und elastischem bzw. zähhartem Material ausgebildete Abdeckplatte 18 weist eine Öffnung 20 auf, welche beispielsweise über einen insbesondere flexiblen Schlauch 21 mit dem ringförmigen Absaugkanal 10 verbunden ist, welcher beispielsweise ähnlich der Ausführungsform gemäß Fig. 4 positioniert ist, wobei aus dem ringförmigen Absaugkanal 10 ähnlich wie bei den vorangehenden Ausführungsformen über den Anschluß 11 ein Ausbringen von Abfall bzw. Spänen erfolgt.

Durch Vorsehen der zusätzlichen Abdeckplatte 18 bei der Ausführungsform gemäß Fig. 5 wird sichergestellt, daß nicht nur Abfall bzw. Späne unmittelbar von dem Bereich des Fräsers, welcher in Fig. 5 nicht dargestellt ist, in den ringförmigen Absaugkanal 10 wie bei den vorangehenden Ausführungsformen ausgetragen wird bzw. werden, sondern daß auch der Anteil von Spänen, welcher durch den Fräser bzw. das Werkzeug in Richtung zum Antrieb 2 geschleudert wird, zuverlässig über den Absaugkanal sowie den Anschluß 11 ausgebracht werden kann und somit ein Austreten in die Umgebung verhindert werden kann.

## Patentansprüche

1. Absaugeinrichtung für ein motorbetriebenes Handwerkzeug (1), insbesondere eine Fräsmaschine, wobei die Maschine auf dem zu bearbeitenden Werkstück über eine Auflageplatte (4) anordenbar und relativ zu dem Werkstück bewegbar ist und das Werkzeug (5), insbesondere ein Fräser, die Auflageplatte (4) durchdringt und vorzugsweise relativ zu der Auflageplatte (4) in Höhenrichtung verstellbar ist, wobei im Bereich der Auflageplatte (4) der Maschine (1) eine zu dem Werkzeug (5) gerichtete, entlang dem Umfang der Auflageplatte (4) verstellbar ausgebildete Aufnahmeöffnung (9) zur Aufnahme von Abfall, Spänen, Staub oder dgl. lösbar festlegbar bzw. montierbar ist, an welche über einen Anschluß (11) eine Saugquelle zum Ausbringen des Abfalls bzw. der Späne angeschlossen bzw. anschließbar ist,
**dadurch gekennzeichnet, daß** die Aufnahmeöffnung (9) in einen ringförmigen Absaugkanal (10) mündet, welcher im Bereich des Außenumfangs der Auflageplatte (4) lösbar festlegbar ist, und daß an den ringförmigen Absaugkanal (10) die Saugquelle angeschlossen bzw. anschließbar ist.

2. Absaugeinrichtung nach Anspruch 1, **dadurch gekennzeichnet, daß** die Aufnahmeöffnung (9) trichterförmig ist.

3. Absaugeinrichtung nach Anspruch 1 oder 2, **dadurch gekennzeichnet, daß** die Aufnahmeöffnung (9) über einen rohrförmigen Kanal (14) in den ringförmigen Absaugkanal (10) mündet.

4. Absaugeinrichtung nach einem der Ansprüche 1 bis 3 **dadurch gekennzeichnet, daß** die Aufnahmeöffnung (9) oder der rohrförmige Kanal (14) über eine Gleiteinrichtung (12) in den ringförmigen Absaugkanal (10) mündet.

5. Absaugeinrichtung nach einem der Ansprüche 1 bis 4, **dadurch gekennzeichnet, daß** der Absaugkanal (10) und die Aufnahmeöffnung (9) an der zum Werkstück gerichteten Oberfläche der Auflageplatte (4) konzentrisch zur Antriebsachse (6) des Werkzeugs (5) angeordnet sind und daß benachbart zu dem Absaugkanal (10) eine in Richtung zum Werkstück vorragende Abstützoberfläche (13) ausgebildet ist.

6. Absaugeinrichtung nach einem der Ansprüche 1 bis 4, **dadurch gekennzeichnet, daß** der Absaugkanal (10) an der vom Werkstück abgewandten Seite bzw. Oberfläche der Auflageplatte (4) und/oder an einer Halterung (3) zwischen der Maschine (1) und der Auflageplatte (4) angeordnet bzw. festgelegt ist und daß der rohrförmige Kanal (14) zur Verbindung mit der Aufnahmeöffnung (9) an der Außenseite der Auflageplatte (4) ausgebildet ist.

7. Absaugeinrichtung nach Anspruch 6, **dadurch gekennzeichnet, daß** der Absaugkanal (10) relativ zur Auflageplatte (4) höhenverstellbar ausgebildet ist.

8. Absaugeinrichtung nach einem der Ansprüche 1 bis 7, **dadurch gekennzeichnet, daß** oberhalb der Auflageplatte (4) und in Abstand von dieser eine vorzugsweise lösbare Abdeckplatte (18) vorgesehen ist, wobei der Freiraum zwischen der Auflageplatte (4) und der Abdeckplatte (18) mit dem Anschluß (11) der Saugquelle in Verbindung steht.

9. Absaugeinrichtung nach Anspruch 8, **dadurch gekennzeichnet, daß** in der Abdeckplatte (18) eine Anschlußöffnung (20) vorgesehen ist, welche über einen insbesondere flexiblen Schlauch (21) mit dem ringförmigen Absaugkanal (10) in Verbindung steht.

10. Absaugeinrichtung nach Anspruch 8 oder 9, **dadurch gekennzeichnet, daß** im Bereich der Festlegung der Abdeckplatte (18), welche in eine entsprechende Führung (17) insbesondere seitlich einschiebbar ist, und/oder dem Durchtritt einer Antriebswelle (19) Bürsten (23) vorgesehen sind.

11. Absaugeinrichtung nach Anspruch 8, 9 oder 10, **dadurch gekennzeichnet, daß** die Abdeckplatte (18) transparent und insbesondere aus einem elastischen, zähharten Werkstoff ausgebildet ist.

## Claims

1. Extraction device for a motor-driven hand tool (1), in particular for a milling machine, wherein the machine can be placed on the workpiece to be machined by way of a base plate (4) and moved relative to the workpiece, and wherein the tool (5), in particular a milling cutter, penetrates the base plate (4) and is preferably vertically adjustable relative to the base plate (4), with an intake opening (9) for waste material, chips, dust and the like, which is oriented towards the tool (5) and adjustable along the circumference of the base plate (4), being releasably secured or mounted in the area of the base plate (4) of the machine (1), to which a vacuum source is or can be connected via a connection (11) for the removal of the waste material or chips, **characterised in that** the intake opening (9) terminates in an annular extraction passage (10) which can be releasably secured in the area of the outer circumference of the base plate (4), and **in that** the vacuum source is or can be connected to the annular extraction passage (10).

2. Extraction device according to claim 1, **characterised in that** the intake opening (9) is funnel-shaped.

3. Extraction device according to claim 1 or 2, **characterised in that** the intake opening (9) terminates in the annular extraction passage (10) via a tubular passage (14).

4. Extraction device according to any of claims 1 to 3, **characterised in that** the intake opening (9) or the tubular passage (14) terminates in the annular extraction passage (10) via a sliding device (12).

5. Extraction device according to any of claims 1 to 4, **characterised in that** the extraction passage (10) and the intake opening (9) are arranged concentric with the drive axis (6) of the tool (5) on the surface of the base plate (4) which faces the workpiece, and **in that** a supporting surface (13) projecting towards the workpiece is provided adjacent to the extraction passage (10).

6. Extraction device according to any of claims 1 to 4, **characterised in that** the extraction passage (10) is located on or secured to the side or surface of the of the base plate (4) which is remote from the workpiece and/or on a bracket (3) between the machine (1) and the base plate (4), and **in that** the tubular passage (14) is formed on the outside of the base plate (4) for connection to the intake opening (9).

7. Extraction device according to claim 6, **characterised in that** the extraction passage (10) is vertically adjustable relative to the base plate (4).

8. Extraction device according to any of claims 1 to 7, **characterised in that** a preferably detachable cover plate (18) is provided above the base plate (4) and at a distance therefrom, the space between the base plate (4) and the cover plate (18) being connected to the connection (11) of the vacuum source.

9. Extraction device according to claim 8, **characterised in that** a connecting port (20) is provided in the cover plate (18), which is connected to the annular extraction passage (10) by an in particular flexible hose (21).

10. Extraction device according to claim 8 or 9, **characterised in that** brushes (23) are provided in the mounting area of the cover plate (18), which can be, in particular laterally, inserted into a suitable guide (17), and/or in the passage for a drive shaft (19).

11. Extraction device according to claim 8, 9 or 10, **characterised in that** the cover plate (18) is transparent and in particular made of a tough and hard elastic material.

## Revendications

1. Dispositif d'aspiration pour un outil à main motorisé (1), en particulier une défonceuse, la machine pouvant être placée sur la pièce à usiner par l'intermédiaire d'une plaque d'appui (4) et étant mobile par rapport à la pièce, et l'outil (5), en particulier une fraise, traversant la plaque d'appui (4) et étantde préférenceréglableen hauteur par rapport à la plaque d'appui (4), dans lequel une ouverture de réception (9) dirigée vers l'outil (5) et mobile sur le pourtour de la plaque d'appui (4), pouvant être fixée ou montéede manière amovible au niveau de la plaque d'appui (4) de la machine (1) pour recevoir des déchets, copeaux, poussières et analogues, ouverture à laquelle une source d'aspiration destinée à évacuer les déchets ou copeaux est ou peut être raccordée par l'intermédiaire d'un embout (11),
**caractérisé e**n ce que l'ouverture de réception (9) débouche dans un canal d'aspiration (10) annulaire qui peut être fixé de manière amovible au niveau du pourtour extérieur de la plaque d'appui (4), et en ce que la source d'aspiration est raccordée ou peut être raccordée au canal d'aspiration annulaire (10).

2. Dispositif d'aspiration selon la revendication 1, **caractérisé e**n ce que l'ouverture de réception (9) est en forme d'entonnoir.

3. Dispositif d'aspiration selon la revendication 1 ou 2, **caractérisé e**n ce que l'ouverture de réception (9) débouche dans le canal d'aspiration annulaire (10) par l'intermédiaire d'un canal tubulaire (14).

4. Dispositif d'aspiration selon l'une des revendications 1 à 3, **caractérisé e**n ce que l'ouverture de réception (9) ou le canal tubulaire (14) débouchedans le canal d'aspiration annulaire (10) par l'intermédiaire d'un dispositif coulissant (12).

5. Dispositif d'aspiration selon l'une des revendications 1 à 4, **caractérisé e**n ce que le canal d'aspiration (10) et l'ouverture de réception (9) sont placés de manière concentrique à l'axe d'entraînement (6) de l'outil (5) sur la surface de la plaque d'appui (4) tournéevers la pièce, et en ce qu'au voisinage du canal d'aspiration (10) est formée une surface de soutien (13) formant saillie en direction de la pièce.

6. Dispositif d'aspiration selon l'une des revendications 1 à 4, **caractérisé e**n ce que le canal d'aspiration (10) est placé ou fixé sur la face ou surface de la plaque d'appui (4) opposéeà la pièce et/ou sur un support (3) entre la machine (1) et la plaque d'appui (4), et en ce que le canal tubulaire (14) est conformépour se relier à l'ouverture de réception (9) sur la face extérieure de la plaque d'appui (4).

7. Dispositif d'aspiration selon la revendication 6, **caractérisé e**n ce que le canal d'aspiration (10) est réalisémobile en hauteur par rapport à la plaque d'appui (4).

8. Dispositif d'aspiration selon l'une des revendications 1 à 7, **caractérisé e**n ce qu'une plaque de recouvrement (18) de préférence amovible est prévue au-dessus de la plaque d'appui (4) et à distance de celle-ci, l'interstice entre la plaque d'appui (4) et la plaque de recouvrement (18) étant en liaison avec l'embout (11) de la source d'aspiration.

9. Dispositif d'aspiration selon la revendication 8, **caractérisé e**n ce qu'il est prévu dans la plaque de recouvrement (18) une ouverture de raccordement (20) qui est en liaison avec le canal d'aspiration annulaire (10) par l'intermédiaire d'un tuyau (21) en particulier flexible.

10. Dispositif d'aspiration selon la revendication 8 ou 9, **caractérisé e**n ce que des brosses (23) sont prévuesau niveau de la fixation de la plaque de recouvrement (18), laquelle peut êtreengagéeen particulier latéralement dans un guidage (17) approprié, et/ou du passage d'un arbre d'entraînement (19).

11. Dispositif d'aspiration selon la revendication 8, 9 ou 10, **caractérisé en ce que** la plaque de recouvrement (18) est réalisée transparente et, en particulier, dans un matériau élastique et dur.
